# FASCICULE DE BREVET EUROPEEN

(11) **EP 3 189 992 B1**
(45) Date de publication et mention de la délivrance du brevet: **08.08.2018**
(21) Numéro de dépôt: 16203117.3
(22) Date de dépôt: 09.12.2016
(51) Int. Cl.: B60G 21/073, B60G 21/10, B60G 21/00, G01N 11/00, B60G 17/08, F16F 9/44, B60G 17/016

(54) **DISPOSITIF DE GESTION DU ROULIS SUR UN VEHICULE AUTOMOBILE PENDULAIRE**
VORRICHTUNG ZUR STEUERUNG DER ROLLBEWEGUNG AUF EINEM PENDEL-KRAFTFAHRZEUG
DEVICE FOR ROLL MANAGEMENT IN A TILTING MOTOR VEHICLE

(30) Priorité: 11.01.2016 FR 1650180
(43) Date de publication de la demande: 12.07.2017
(73) Titulaire: PSA Automobiles SA, 78300 Poissy (FR)
(72) Inventeur: GERARD, Fabien, 91400 ORSAY (FR); BERTHIAS, Gilles, 91270 VIGNEUX SUR SEINE (FR); ONFRAY, Frederic, 92350 LE PLESSIS ROBINSON (FR); CAVAREC, Alan, 78350 LES LOGES EN JOSAS (FR)

(56) Documents cités:
- EP-A1- 0 963 868
- WO-A2-2011/083335
- DE-A1-102011 008 446
- GB-B- 2 372 792
- JP-A- H03 513
- JP-A- H0 516 632
- JP-A- H05 319 054
- JP-A- 2002 127 727
- US-B1- 6 219 601

## Description

L'invention porte sur un dispositif de gestion du roulis sur un véhicule automobile pendulaire. Elle porte également sur un procédé de gestion du roulis sur un véhicule automobile pendulaire, qui utilise un tel dispositif afin de conserver une bonne stabilité du véhicule dans les phases de mise en roulis. Elle porte enfin sur un véhicule automobile pendulaire, qui comporte un dispositif de gestion du roulis conforme à la présente invention.

Par définition, le roulis est un balancement latéral. Il s'agit du fait que le véhicule s'incline dans les virages. Par exemple, dans un virage à droite pris un peu trop vite, le véhicule va davantage porter son poids sur les roues de gauche situées à l'extérieur du virage. Puis, à la sortie du virage, ce sont plutôt les roues de droite qui vont être mises à contribution. C'est ce balancement, qui est appelé le roulis.

Le document WO 2011/083335 A divulgue un dispositif de gestion du roulis sur un véhicule automobile pendulaire du type à suspension hydraulique.

Par véhicule automobile pendulaire, on entend, dans la suite du texte, tout véhicule automobile à trois ou quatre roues, inclinable dans les virages pour lesquels on ne peut poser le pied au sol et qui, de ce fait, nécessite un système de prévention dynamique des chutes.

Un des systèmes de suspension rencontrés sur ce type de véhicule automobile est le système de suspension hydropneumatique, qui est constitué principalement de deux vérins hydrauliques, liés respectivement à la roue de droite et à la roue de gauche et reliés entre eux par un bloc hydraulique. Sur ce bloc hydraulique sont assemblées des électrovannes permettant de contrôler le débit de fluide hydraulique d'un vérin à l'autre et, par conséquent, la vitesse d'inclinaison du véhicule en fonction de paramètres prédéfinis, tels que la vitesse du véhicule, l'angle de roulis, etc. Pour assurer la stabilité du véhicule, il faut que le débit de fluide hydraulique dans le circuit hydraulique soit constant pour une position d'ouverture donnée des électrovannes.

Il importe de noter que la viscosité du fluide hydraulique, qui est par exemple de l'huile, varie en fonction de la température, et cette variation de la viscosité de l'huile a pour résultat une modification du débit d'huile. On a déjà cherché à « gérer » les variations de la viscosité de l'huile. Ainsi, par exemple, le document DE 10 2011 008 446 A1 décrit un véhicule qui présente plusieurs vérins de commande hydrauliques vissés sur une partie de châssis du véhicule pour remplacer les mécanismes de prise au sol. Les vérins hydrauliques sont commandés par des conduites ou lignes hydrauliques. Une tubulure inclinée déplaçable en rotation est bloquée dans un support de type caoutchouc en bas du châssis, où la commande de direction d'une roue prend place par l'intermédiaire de la rotation de ladite tubulure inclinée dans le support caoutchouc. Un stabilisateur transversal commande un champ électrostatique/magnétique d'huile à viscosité variable lorsque deux ressorts sont remis en place par une vanne unique de course et la phase de compression de deux amortisseurs.

A titre d'exemple également, le document GB 2372792 B décrit un amortisseur qui comprend un cylindre, qui définit une chambre de fluide magnéto rhéologique, et un piston, dont la tête se déplace dans ladite chambre de fluide. Un passage de fluide est prévu dans la tête de piston au travers duquel du fluide peut passer d'un côté à l'autre de cette dernière. La tête de piston comprend un électroaimant permettant d'appliquer un champ magnétique à travers le fluide magnéto rhéologique dans le passage de fluide, de façon à modifier sa viscosité et, en conséquence, à modifier la réponse de l'amortisseur. De plus, la tête de piston comprend au moins deux pièces distinctes réalisées en un matériau ayant une relativement forte perméabilité magnétique et formant un chemin pour le flux magnétique à partir de l'électroaimant, les parties de ces pièces étant fixées ensemble sans soudure et coopérant par concordance des formes pour définir ledit passage de fluide,

Le but de la présente invention est de fournir un dispositif de gestion du roulis sur un véhicule automobile pendulaire, qui permette de bien maîtriser la vitesse et l'angle de roulis en fonction des différentes situations de vie du véhicule.

Un autre but de la présente invention est de fournir un tel dispositif de gestion du roulis, qui garantisse la sécurité du conducteur du véhicule en offrant un système efficace de prévention dynamique des chutes.

Enfin, c'est également un but de la présente invention de fournir un tel dispositif de gestion du roulis, qui soit de conception et de réalisation simples, qui soit efficace, précis, fiable et économique.

Pour parvenir à ces buts, la présente invention a pour objet un dispositif de gestion du roulis sur un véhicule automobile pendulaire du type comprenant deux amortisseurs hydrauliques associés respectivement aux roues de gauche et de droite du véhicule, un bloc hydraulique, qui relie les deux amortisseurs hydrauliques, et deux électrovannes proportionnelles dont les ouvertures assurent le débit de fluide hydraulique dans l'un et l'autre des deux amortisseurs hydrauliques pour le contrôle de la vitesse d'inclinaison du véhicule en fonction de paramètres de conduite de ce dernier. Ce dispositif de gestion du roulis du véhicule comporte, de plus, un moyen de mesure de la viscosité du fluide hydraulique dans le circuit de ce dernier, et un moyen de pilotage de l'amplitude d'ouverture des électrovannes proportionnelles en fonction de la valeur de la viscosité mesurée, de façon à conserver une bonne stabilité du véhicule dans les phases de mise en roulis.

Le moyen de pilotage de l'amplitude d'ouverture des électrovannes proportionnelles peut avantageusement être constitué d'un moyen de transformation de la valeur de la viscosité mesurée dans le circuit (par exemple dans le bloc) hydraulique en une valeur d'une caractéristique du courant électrique appliqué à l'alimentation des électrovannes proportionnelles ou aux bobines électromagnétiques desdites électrovannes, de façon à ajuster le débit de ces dernières.

La caractéristique du courant électrique appliqué à l'alimentation ou aux bobines électromagnétiques des électrovannes proportionnelles peut être l'une des caractéristiques suivantes : l'intensité du courant alimentant les électrovannes ou traversant les bobines électromagnétiques de ces dernières, ou bien la tension d'alimentation des électrovannes proportionnelles ou celle appliquée aux bobines électromagnétiques des électrovannes.

Le moyen de transformation de la valeur de la viscosité mesurée dans le bloc hydraulique en une valeur d'une caractéristique du courant électrique appliqué aux électrovannes proportionnelles ou aux bobines électromagnétiques des électrovannes est intégré dans un calculateur embarqué du véhicule et présente la forme de logiciels et/ou de circuits électroniques.

Selon un mode préféré de réalisation de l'invention, le moyen de mesure de la viscosité du fluide hydraulique dans le circuit ou le bloc hydraulique peut être un capteur de viscosité, appelé aussi « viscosimètre ».

Selon une variante de réalisation de l'invention, le moyen de mesure de la viscosité du fluide hydraulique dans le circuit ou le bloc hydraulique peut être constitué d'un capteur de température et d'un moyen de calcul de la viscosité du fluide hydraulique à partir de la température mesurée par le capteur.

Selon une autre variante de réalisation, le moyen de mesure de la viscosité du fluide hydraulique peut être constitué d'un capteur de pression du fluide hydraulique dans le circuit ou le bloc hydraulique, d'un capteur de déplacement de roue et d'un moyen de calcul de la viscosité du fluide hydraulique à partir de la pression du fluide hydraulique et du déplacement de roue mesurés.

De préférence, le fluide hydraulique est de l'huile, en particulier de l'huile minérale.

La présente invention a également pour objet un procédé de gestion du roulis sur un véhicule automobile pendulaire, le système de suspension du véhicule étant du type comprenant deux amortisseurs hydrauliques associés respectivement aux roues de gauche et de droite du véhicule, un bloc hydraulique, qui relie les deux amortisseurs hydrauliques, et deux électrovannes proportionnelles dont les ouvertures assurent le débit d'huile dans l'un et l'autre des deux amortisseurs hydrauliques. Ce procédé, nouveau, comporte les étapes suivantes, prises en combinaison :
a. on mesure la viscosité du fluide hydraulique (huile) dans le circuit hydraulique, par exemple dans le bloc hydraulique, et
b. on ajuste l'amplitude d'ouverture des électrovannes proportionnelles en fonction de la valeur de la viscosité mesurée, de façon à conserver une bonne stabilité du véhicule dans les phases de mise en roulis.

La présente invention a enfin pour objet un véhicule automobile pendulaire, du type à système de suspension hydropneumatique, dans lequel ledit système de suspension est piloté par un dispositif de gestion du roulis conforme à celui décrit précédemment dans ses grandes lignes.

D'autres buts, avantages et caractéristiques de l'invention apparaîtront dans la description qui suit d'un exemple de réalisation, non limitatif de l'objet et de la portée de la présente demande de brevet, accompagnée de dessins dans lesquels :
- la figure 1 est un schéma fonctionnel d'un système de suspension hydropneumatique d'un véhicule automobile pendulaire, et
- la figure 2 est une vue en perspective d'un système de suspension hydropneumatique d'un véhicule automobile pendulaire, qui comporte un dispositif de gestion du roulis conforme à la présente invention.

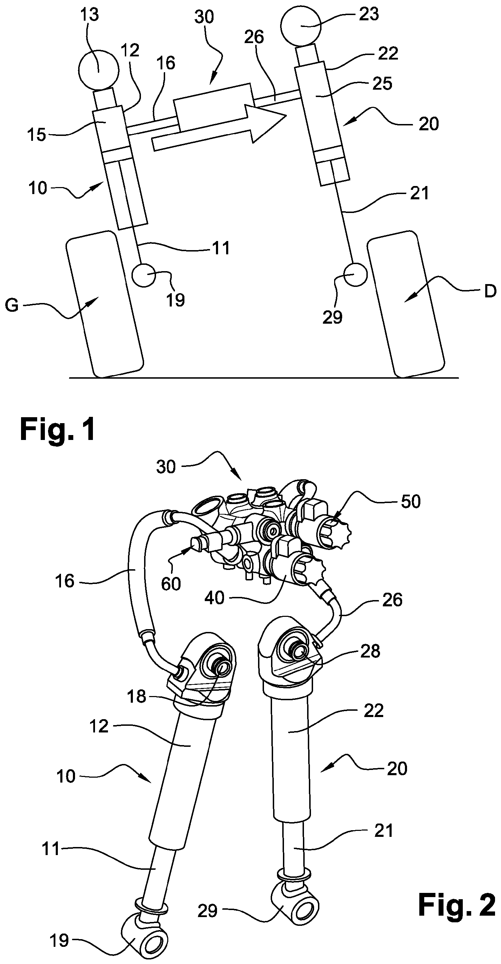

En référence au dessin de la figure 1, on a représenté, de façon très schématique, les organes d'un système de suspension hydropneumatique d'un véhicule automobile pendulaire. Ce système de suspension comprend un amortisseur hydraulique de gauche, désigné par la référence numérique 10, un amortisseur hydraulique de droite, désigné par la référence numérique 20, un bloc hydraulique, désigné par la référence numérique 30, qui relie les deux amortisseurs hydrauliques 10 et 20 par l'intermédiaire des conduits hydrauliques 16 et 26, respectivement, un accumulateur hydropneumatique de gauche 13 et un accumulateur hydropneumatique de droite 23, les deux accumulateurs étant, de manière connue en soi, des réservoirs divisés en deux chambres : une chambre pour le fluide hydraulique sous pression et une chambre pour un gaz, par exemple de l'azote.

Le fluide hydraulique est l'huile, par exemple l'huile minérale.

Les deux amortisseurs hydrauliques 10 et 20 sont de type « vérin hydraulique ». Chaque amortisseur 10, respectivement 20, comporte une chambre supérieure 15, respectivement 25, de volume variable, qui communique avec le circuit hydraulique.

L'amortisseur hydraulique de gauche 10 comprend une extrémité inférieure 19, qui est formée par la partie terminale de l'axe du piston ou tige de vérin 11 et qui est couplée à la roue gauche G, et une extrémité supérieure, qui est formée par la partie supérieure 18 (figure 2) du corps de vérin 12 et qui est montée sur le châssis du véhicule. L'amortisseur hydraulique de droite 20 comprend une extrémité inférieure 29, qui est formée par la partie terminale de l'axe du piston ou tige de vérin 21 et qui est couplée à la roue droite D, et une extrémité supérieure 28 (figure 2), qui est formée par la partie supérieure du corps de vérin 22 et qui est montée sur le châssis du véhicule.

Comme représenté sur le dessin de la figure 2, deux électrovannes proportionnelles, désignées par les références numériques 40 et 50, sont positionnées sur le circuit d'huile, formant une boucle centrale reliant l'amortisseur de gauche 10 à l'amortisseur de droite 20.

Par « électrovanne proportionnelle », on entend une électrovanne qui peut être ouverte avec plus ou moins d'amplitude. Selon les types d'électrovannes proportionnelles, l'ouverture peut être proportionnelle à l'intensité du courant électrique d'alimentation, ou à la tension électrique de cette alimentation. Ce type d'électrovanne est piloté par l'intermédiaire d'une commande.

Sur le schéma de la figure 1, le véhicule est en phase de prise de roulis. L'huile du vérin formant l'amortisseur de gauche 10 est refoulée dans le vérin de l'amortisseur de droite 20, comme illustré par la flèche F. Le bloc hydraulique 30 laisse passer l'huile du côté gauche vers le côté droit. En phase de roulis extrême (non représentée), le bloc hydraulique 30 coupe progressivement le passage de l'huile entre le vérin de l'amortisseur de gauche 10 et le vérin de l'amortisseur de droite 20, mais pas entre le vérin de l'amortisseur de droite 20 et le vérin de l'amortisseur de droite 10, de façon à permettre au conducteur du véhicule de redresser le véhicule.

Les électrovannes proportionnelles 40 et 50 permettent de contrôler la vitesse d'inclinaison du véhicule en fonction de paramètres prédéfinis, tels que la vitesse du véhicule, l'angle de roulis, etc.

Pour assurer la stabilité du véhicule, il faut que le débit d'huile soit constant pour une amplitude ou position d'ouverture de l'une ou l'autre des électrovannes 40 et 50.

Il importe de noter que la viscosité « 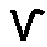 » de l'huile, qui est la résistance à l'écoulement uniforme et sans turbulences, varie en fonction de la température. Quand la viscosité augmente, la capacité de l'huile à s'écouler diminue. Pour l'huile, la viscosité tend généralement à diminuer lorsque la température augmente.

Ainsi, le débit d'huile dans les électrovannes et dans le circuit d'huile (bloc et conduits hydrauliques) dépend de la viscosité de l'huile. Il est, par conséquent, nécessaire d'ajuster plus finement l'amplitude d'ouverture des électrovannes proportionnelles 40 et 50 pour conserver une bonne stabilité du véhicule dans les phases de mise en roulis. Lors de ces phases de mise en roulis, l'huile circule du vérin de l'amortisseur de droite 20 au vérin de l'amortisseur de gauche 10 et inversement. Les sollicitations répétées ont pour effet d'augmenter le température de l'huile par effet de laminage (énergie mécanique se transformant en énergie calorifique) dans le bloc hydraulique 30, ce qui diminue la viscosité de l'huile et entraîne une variation de débit dans chacune des deux électrovannes 40 et 50 et, par conséquent, une vitesse de roulis mal maîtrisée.

Selon le principe même de la présente invention, il est prévu un moyen de mesure de la viscosité désignée « 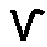 » du fluide hydraulique dans le circuit hydraulique, par exemple dans le bloc hydraulique 30, dont le résultat est adressé à un moyen de pilotage de l'amplitude d'ouverture des électrovannes proportionnelles 40 et 50 en fonction dudit résultat obtenu relativement à la mesure de viscosité « 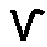 », de façon à conserver une bonne stabilité du véhicule dans les phases de mise en roulis.

De cette façon, on ajuste l'amplitude d'ouverture des électrovannes proportionnelles 40 et 50 en fonction de la viscosité de l'huile.

Plusieurs types de capteurs, intégrés au niveau des canalisations d'huile du bloc hydraulique 30 reliant les vérins des amortisseurs de gauche 10 et de droite 20 permettent d'obtenir la valeur de la viscosité de l'huile.

On peut utiliser un capteur de température, et connaître la viscosité de l'huile à partir des formules et diagrammes connus liant la viscosité à la température pour une huile donnée.

En variante, on peut utiliser un capteur de viscosité, appelé aussi viscosimètre, comme représenté sur le dessin de la figure 2 et désigné par la référence numérique 60.

En variante également, il est possible d'utiliser un capteur de pression du circuit hydraulique couplé à un capteur de déplacement de la roue.

Le moyen de pilotage de l'amplitude d'ouverture des électrovannes proportionnelles 40, 50 comprend un moyen de transformation de la valeur de la viscosité « ν » mesurée dans le circuit hydraulique ou le bloc hydraulique 30 en une valeur d'une caractéristique du courant électrique « I » appliqué à l'alimentation des électrovannes 40, 50, c'est-à-dire à l'alimentation des bobines électromagnétiques desdites électrovannes, de façon à ajuster le débit de ces dernières.

La caractéristique du courant électrique (« I ») appliqué à l'alimentation des électrovannes proportionnelle 40 et 50, et par conséquent aux bobines électromagnétiques des électrovannes, peut être l'intensité « i » du courant traversant les électrovannes ou les bobines électromagnétiques de ces dernières, ou bien la tension « U » appliquée aux électrovannes ou à leurs bobines électromagnétiques.

Ce moyen de transformation de la valeur de la viscosité « 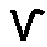 » mesurée en une valeur d'une caractéristique du courant électrique « I » peut avantageusement être intégré dans un calculateur embarqué spécifique, ou bien être intégré dans un calculateur du véhicule chargé de la supervision de plusieurs organes. Ce moyen de transformation peut être réalisé sous la forme de modules logiciels (ou informatiques ou « software »), ou peut être réalisé sous la forme d'une combinaison de circuits électronique (ou « hardware ») et de modules logiciels. Ce moyen de transformation, qu'il soit composé de logiciels et/ou de circuits électroniques, est conçu pour définir l'amplitude d'ouverture des électrovannes 40, 50 en fonction de la viscosité « 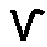 » de l'huile.

Le fonctionnement du système de pilotage décrit ci-dessus est le suivant :
- on mesure la viscosité « 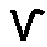 » de l'huile dans le circuit hydraulique, par exemple dans le bloc hydraulique 30, et
- on ajuste l'amplitude d'ouverture des électrovannes proportionnelles 40, 50 en fonction de la valeur ainsi mesurée de la viscosité, de façon à conserver une bonne stabilité du véhicule dans les phases de mise en roulis, l'ajustement étant réalisé en modifiant l'intensité ou la tension du courant d'alimentation des électrovannes proportionnelles 40, 50 en fonction de ladite valeur mesurée de la viscosité.

Le dispositif de pilotage de système de suspension hydropneumatique d'un véhicule automobile pendulaire, décrit ci-dessus, permet de maîtriser avec précision la vitesse et l'angle de roulis du véhicule en fonction des situations de vie de ce dernier, et permet, en conséquence, de garantir la sécurité du conducteur du véhicule et de lui éviter les chutes.

## Revendications

1. Dispositif de gestion du roulis sur un véhicule automobile pendulaire du type à suspension hydropneumatique comprenant deux amortisseurs hydrauliques (10, 20) associés respectivement aux roues de gauche (G) et de droite (D) du véhicule, un bloc hydraulique (30), qui relie les deux amortisseurs hydrauliques (10, 20), et deux électrovannes proportionnelles (40, 50) dont les ouvertures assurent le débit de fluide hydraulique dans l'un et l'autre des deux amortisseurs hydrauliques (10, 20) pour le contrôle de la vitesse d'inclinaison du véhicule en fonction de paramètres de conduite de ce dernier, ledit dispositif de gestion du roulis étant **caractérisé en ce qu'**il comporte un moyen de mesure de la viscosité (« 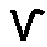 ») du fluide hydraulique dans le circuit du fluide hydraulique, et un moyen de pilotage de l'amplitude d'ouverture des électrovannes proportionnelles (40, 50) en fonction de la valeur mesurée de la viscosité (« 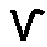 »), de façon à conserver une bonne stabilité du véhicule dans les phases de mise en roulis.

2. Dispositif de gestion du roulis selon la revendication 1, **caractérisé en ce que** le moyen de pilotage de l'amplitude d'ouverture des électrovannes proportionnelles (40, 50) comprend un moyen de transformation de la valeur de la viscosité (« 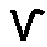 ») mesurée dans le circuit de fluide hydraulique en une valeur d'une caractéristique du courant électrique (« I ») appliqué aux électrovannes proportionnelles (40, 50), de façon à ajuster le débit de ces dernières.

3. Dispositif de gestion du roulis selon la revendication 2, **caractérisé en ce que** la caractéristique du courant électrique (« I ») appliqué aux électrovannes proportionnelles (40, 50) est l'une des caractéristiques suivantes : l'intensité (« i ») du courant traversant les électrovannes proportionnelles (50, 60) ou les bobines électromagnétiques desdites électrovannes, ou bien la tension (« U ») appliquée aux électrovannes proportionnelles (40, 50) ou aux bobines électromagnétiques desdites électrovannes.

4. Dispositif de gestion du roulis selon l'une quelconque des revendications 2 et 3, **caractérisé en ce que** le moyen de transformation de la valeur de la viscosité (« 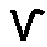 ») mesurée dans le circuit de fluide hydraulique en une valeur d'une caractéristique du courant électrique (« I ») appliqué aux électrovannes proportionnelles (40, 50) est intégré dans un calculateur embarqué du véhicule et présente la forme de logiciels et/ou de circuits électroniques.

5. Dispositif de gestion du roulis selon l'une quelconque des revendications 1 à 4, **caractérisé en ce que** le moyen de mesure de la viscosité (« 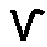 ») du fluide hydraulique est un capteur de viscosité (60).

6. Dispositif de gestion du roulis selon l'une quelconque des revendications 1 à 4, **caractérisé en ce que** le moyen de mesure de la viscosité (« 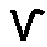 ») du fluide hydraulique est constitué, d'une part, d'un capteur de température du fluide, et d'autre part, d'un moyen de calcul de la viscosité du fluide hydraulique à partir de la température mesurée.

7. Dispositif de gestion du roulis selon l'une quelconque des revendications 1 à 4, **caractérisé en ce que** le moyen de mesure de la viscosité (« 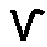 ») du fluide hydraulique est constitué d'un capteur de pression du fluide hydraulique dans le circuit de fluide hydraulique, d'un capteur de déplacement de roue et d'un moyen de calcul de la viscosité (« 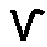 ») du fluide hydraulique à partir de la pression du fluide hydraulique et du déplacement de roue mesurés.

8. Dispositif de gestion du roulis selon l'une quelconque des revendications 1 à 7, **caractérisé en ce que** le fluide hydraulique est de l'huile.

9. Procédé de gestion du roulis sur un véhicule automobile pendulaire du type à suspension hydropneumatique comprenant deux amortisseurs hydrauliques (10, 20) associés respectivement aux roues de gauche (G) et de droite (D), un bloc hydraulique (30), qui relie les deux amortisseurs hydrauliques (10, 20), et deux électrovannes proportionnelles (40, 50) dont les ouvertures assurent le débit de fluide hydraulique dans l'un et l'autre amortisseur hydraulique (10 ; 20) pour le contrôle de la vitesse d'inclinaison du véhicule en fonction de paramètres de conduite de ce dernier, ledit procédé étant **caractérisé par** les étapes suivantes, prises en combinaison :
- on mesure la viscosité (« 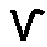 ») du fluide hydraulique dans le circuit dudit fluide hydraulique,
- on ajuste l'amplitude d'ouverture des électrovannes proportionnelles (40, 50) en fonction de la valeur de la viscosité (« 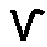 ») mesurée, de façon à conserver une bonne stabilité du véhicule dans les phases de mise en roulis.

10. Véhicule automobile pendulaire, du type à système de suspension hydropneumatique, **caractérisé en ce que** ledit système de suspension hydropneumatique est piloté par un dispositif de gestion du roulis conforme à l'une quelconque des revendications 1 à 8.

## Patentansprüche

1. Vorrichtung zum Steuern der Rollbewegung auf einem Pendel-Kraftfahrzeug vom Typ mit hydropneumatischer Aufhängung, die zwei hydraulische Dämpfer (10, 20) umfasst, die jeweils mit linken (G) und rechten (D) Rädern des Fahrzeugs verbunden sind, einen Hydraulikblock (30), der die zwei hydraulischen Dämpfer (10, 20) verbindet, und zwei proportionale Magnetventile (40, 50), deren Öffnungen den Hydraulikfluiddurchsatz in dem einen und dem anderen der zwei hydraulischen Dämpfer (10, 20) für die Steuerung der Neigungsgeschwindigkeit des Fahrzeugs in Abhängigkeit von Fahrparametern dieses Letzteren sicherstellen, wobei die Vorrichtung zur Verwaltung der Rollbewegung **dadurch gekennzeichnet ist, dass** sie ein Mittel zum Messen der Viskosität ("ν") des Hydraulikfluids in dem Kreislauf des Hydraulikfluids umfasst, und ein Mittel zum Steuern der Öffnungsamplitude der proportionalen Magnetventile (40, 50) in Abhängigkeit von ihrem gemessenen Wert der Viskosität ("ν") derart, dass eine gute Stabilität des Fahrzeugs in den Phasen des Eintretens in Rollbewegung beibehalten wird.

2. Vorrichtung zum Steuern der Rollbewegung nach Anspruch 1, **dadurch gekennzeichnet, dass** das Steuermittel der Öffnungsamplitude der proportionalen Magnetventile (40, 50) ein Mittel zum Umformen des Werts der Viskosität ("ν"), der in dem Hydraulikfluidkreislauf gemessen wird, in einen Wert eines Merkmals elektrischen Stroms ("I") umfasst, der auf die proportionalen Magnetventile (40, 50) derart angewandt wird, dass der Durchfluss dieser Letzteren eingestellt wird.

3. Vorrichtung zum Steuern der Rollbewegung nach Anspruch 2, **dadurch gekennzeichnet, dass** das Merkmal des elektrischen Stroms ("I"), das auf die proportionalen Magnetventile (40, 50) angewandt wird, eines der folgenden Merkmale ist: die Stärke ("I") des Stroms, der die proportionalen Magnetventile (50, 60) oder die Magnetspulen der Magnetventile durchquert, oder die Spannung ("U"), die auf die proportionalen Magnetventile (40, 50) oder auf die elektromagnetischen Spulen der Magnetventile angewandt wird.

4. Vorrichtung zum Steuern der Rollbewegung nach einem der Ansprüche 2 und 3, **dadurch gekennzeichnet, dass** das Mittel zum Umformen des Werts der Viskosität ("ν"), der in dem Hydraulikfluidkreislauf gemessen wird, in einen Wert eines Merkmals des elektrischen Stroms ("I") umgewandelt wird, der auf die proportionalen Magnetventile (40, 50) angewandt wird, in einen Onboard-Rechner des Fahrzeugs integriert ist und die Form von Softwareprogrammen und/oder elektronischen Schaltungen aufweist.

5. Vorrichtung zum Steuern der Rollbewegung nach einem der Ansprüche 1 bis 4, **dadurch gekennzeichnet, dass** das Mittel zum Messen der Viskosität ("ν") des Hydraulikfluids ein Viskositätssensor (60) ist.

6. Vorrichtung zum Steuern der Rollbewegung nach einem der Ansprüche 1 bis 4, **dadurch gekennzeichnet, dass** das Mittel zum Messen der Viskosität ("ν") des Hydraulikfluids einerseits aus einem Temperatursensor des Fluids und andererseits aus einem Mittel zum Berechnen der Viskosität des Hydraulikfluids ausgehend von der gemessenen Temperatur besteht.

7. Vorrichtung zum Steuern der Rollbewegung nach einem der Ansprüche 1 bis 4, **dadurch gekennzeichnet, dass** das Mittel zum Messen der Viskosität ("ν") der Hydraulikflüssigkeit aus einem Drucksensor der Hydraulikflüssigkeit in dem Hydraulikflüssigkeitskreislauf, einem Radbewegungssensor und einem Mittel zum Berechnen der Viskosität ("ν") des Hydraulikfluids ausgehend von dem gemessenen Druck des Hydraulikfluids und der gemessenen Bewegung des Rads besteht.

8. Vorrichtung zum Steuern der Rollbewegung nach einem der Ansprüche 1 bis 7, **dadurch gekennzeichnet, dass** das Hydraulikfluid Öl ist.

9. Verfahren zum Steuern der Rollbewegung auf einem Pendel-Kraftfahrzeug des Typs mit hydropneumatischer Aufhängung, die zwei hydraulische Dämpfer (10, 20) umfasst, die jeweils mit dem linken (G) und dem rechten (D) Rad verbunden sind, einen Hydraulikblock (30), der die zwei hydraulischen Dämpfer (10, 20) verbindet, und zwei proportionale Magnetventile (40, 50), deren Öffnungen den Hydraulikfluiddurchfluss in dem einen oder dem anderen hydraulischen Dämpfer (10; 20) sicherstellen, für die Steuerung der Neigungsgeschwindigkeit des Fahrzeugs in Abhängigkeit von Fahrparametern dieses Letzteren, wobei das Verfahren durch die folgenden Schritte kombiniert genommen gekennzeichnet ist:
- Messung der Viskosität ("ν") des Hydraulikfluids in dem Kreislauf des Hydraulikfluids,
- Einstellen der Öffnungsamplitude der proportionalen Magnetventile (40, 50) in Abhängigkeit von dem gemessenen Wert der Viskosität ("ν") derart, dass eine gute Stabilität des Fahrzeugs in den Phasen des Eintretens in Rollbewegung beibehalten wird.

10. Pendel-Kraftfahrzeug vom Typ mit hydropneumatischem Aufhängungssystem, **dadurch gekennzeichnet, dass** das hydropneumatische Aufhängungssystem von einer Vorrichtung zum Steuern der Rollbewegung gemäß einem der Ansprüche 1 bis 8 gesteuert wird.

## Claims

1. A device for roll management in a tilting motor vehicle of the hydropneumatic suspension type including two hydraulic shock absorbers (10, 20) associated respectively with the left (G) and right (D) wheels of the vehicle, a hydraulic block (30), which connects the two hydraulic shock absorbers (10, 20), and two proportional solenoid valves (40, 50), the openings of which ensure the flow of hydraulic fluid in one and the other of the two hydraulic shock absorbers (10, 20) for the control of the speed of inclination of the vehicle as a function of driving parameters of the latter, said device for roll management being **characterized in that** it comprises a means for measurement of the viscosity ("v") of the hydraulic fluid in the circuit of the hydraulic fluid, and a means for controlling the magnitude of opening of the proportional solenoid valves (40, 50) as a function of the measured value of the viscosity ("v"), so as to maintain a good stability of the vehicle in the rolling phases.

2. The device for roll management according to Claim 1, **characterized in that** the means for controlling the magnitude of opening of the proportional solenoid valves (40, 50) includes a means for transformation of the value of the viscosity ("v") measured in the circuit of hydraulic fluid into a value of a characteristic of the electric current ("l") applied to the proportional solenoid valves (40, 50) so as to adjust the flow of these latter.

3. The device for roll management according to Claim 2, **characterized in that** the characteristic of the electric current ("l") applied to the proportional solenoid valves (40, 50) is one of the following characteristics: the intensity ("I") of the current passing through the proportional solenoid valves (50, 60) or the electromagnetic coils of said solenoid valves, or else the voltage ("U") applied to the proportional solenoid valves (40, 50) or to the electromagnetic coils of said solenoid valves.

4. The device for roll management according to any one of Claims 2 and 3, **characterized in that** the means for transformation of the value of the viscosity ("v") measured in the circuit of hydraulic fluid in a characteristic value of the electric current ("l") applied to the proportional solenoid valves (40, 50) is integrated in an on-board computer of the vehicle and has the form of software and/or of electronic circuits.

5. The device for roll management according to any one of Claims 1 to 4, **characterized in that** the means for measurement of the viscosity ("v") of the hydraulic fluid is a viscosity sensor (60).

6. The device for roll management according to any one of Claims 1 to 4, **characterized in that** the means for measurement of the viscosity ("v") of the hydraulic fluid is constituted, on the one hand, by a sensor of the temperature of the fluid, and on the other hand by a means for calculation of the viscosity of the hydraulic fluid from the measured temperature.

7. The device for roll management according to any one of Claims 1 to 4, **characterized in that** the means for measurement of the viscosity ("v") of the hydraulic fluid is constituted by a sensor of the pressure of the hydraulic fluid in the circuit of hydraulic fluid, a sensor of the wheel movement and a means for calculation of the viscosity ("v") of the hydraulic fluid from the measured pressure of the hydraulic fluid and wheel movement.

8. The device for roll management according to any one of Claims 1 to 7, **characterized in that** the hydraulic fluid is oil.

9. A method for roll management in a tilting motor vehicle of the hydropneumatic suspension type including two hydraulic shock absorbers (10, 20) associated respectively with the left (G) and right (D) wheels, a hydraulic block (30), which connects the two hydraulic shock absorbers (10, 20), and two proportional solenoid valves (40, 50), the openings of which ensure the flow of hydraulic fluid in one and the other hydraulic shock absorber (10; 20) for the control of the speed of inclination of the vehicle as a function of driving parameters of the latter, said method being **characterized by** the following steps, taken in combination:
- the viscosity ("v") of the hydraulic fluid in the circuit of said hydraulic fluid is measured,
- the magnitude of opening of the proportional solenoid valves (40, 50) is adjusted as a function of the measured value of the viscosity ("v"), so as to maintain a good stability of the vehicle in the rolling phases.

10. A tilting motor vehicle, of the type with a hydropneumatic suspension system, **characterized in that** said hydropneumatic suspension system is controlled by a device for roll management according to any one of Claims 1 to 8.
